# EUROPÄISCHE PATENTSCHRIFT

(11) **EP 1 424 354 B1**
(45) Veröffentlichungstag und Bekanntmachung des Hinweises auf die Patenterteilung: **15.03.2006**
(21) Anmeldenummer: 03017812.3
(22) Anmeldetag: 05.08.2003
(51) Int. Cl.: C08J 3/14, C08L 77/00, C08K 5/098

(54) **Laser-Sinter-Pulver mit Metallseifen, Verfahren zu dessen Herstellung und Formkörper, hergestellt aus diesem Laser-Sinter-Pulver**
Laser-sinterable powder with metallic soaps, methods for preparing the same and moulded products thereof
Poudre pour frittage au laser avec des savons métalliques, procédé pour sa préparation et produits moulés à base de cette poudre

(30) Priorität: 28.11.2002 DE 10255793; 07.07.2003 DE 10330591
(43) Veröffentlichungstag der Anmeldung: 02.06.2004
(73) Patentinhaber: Degussa AG, 40474 Düsseldorf (DE)
(72) Erfinder: Monsheimer, Sylvia, 45721 Haltern am See (DE); Grebe, Maik, 44805 Bochum (DE); Baumann, Franz-Erich, Dr., 48249 Dülmen (DE); Mügge, Joachim, Dr., 45721 Haltern am See (DE); Christoph, Wolfgang, 45768 Marl (DE)

(56) Entgegenhaltungen:
- DE-A- 4 421 454
- US-A- 4 351 757
- US-A- 5 271 855
- SCHMACHTENBERG E ET AL: "LASERSINTERN VON POLYAMID. LASER-SINTERING OF POLYAMIDE" KUNSTSTOFFE, CARL HANSER VERLAG. MUNCHEN, DE, Bd. 87, Nr. 6, 1. Juni 1997 (1997-06-01), Seiten 773-774,776, XP000656866 ISSN: 0023-5563

## Beschreibung

Die Erfindung betrifft ein Laser-Sinter-Pulver auf Basis von Polyamid, vorzugsweise Polyamid 12, welches Metallseifen(-partikel) aufweist, ein Verfahren zur Herstellung dieses Pulvers sowie Formkörper, hergestellt durch selektives Laser-Sintern dieses Pulvers.

Die zügige Bereitstellung von Prototypen ist eine in der jüngsten Zeit häufig gestellte Aufgabe. Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel verlaufen ineinander und erstarren schnell wieder zu einer festen Masse. Durch wiederholtes Belichten von immer neu aufgebrachten Schichten können mit diesem Verfahren dreidimensionale Körper auch komplexer Geometrie einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6,136,948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, Ionomere und Polyamid.

In der Praxis hat sich beim Laser-Sintern vor allem Polyamid 12-Pulver (PA 12) für die Herstellung von Formkörpern, insbesondere von technischen Bauteilen bewährt. Die aus PA 12 Pulver gefertigten Teile genügen den hohen Anforderungen, die bezüglich der mechanischen Beanspruchung gestellt werden und kommen damit in ihren Eigenschaften besonders nahe an die späteren Serienteile, die durch Extrusion oder Spritzgießen erstellt werden.

Gut geeignet ist dabei din PA 12-Pulver mit einer mittleren Korngröße (d₅₀) von 50 bis 150 µm, wie man es beispielsweise gemäß DE 197 08 946 oder auch DE 44 21 454 erhält.

Vorzugsweise wird dabei ein Polyamid 12 Pulver mit einer Schmelztemperatur von 185 bis 189 °C, einer Schmelzenthalpie von 112 kJ/mol und einer Erstarrungstemperatur von 138 bis 143 °C, wie es in EP 0 911 142 beschrieben wird.

Nachteilig bei den derzeit eingesetzten Polyamid-Pulvern sind Einfallstellen, sowie raue Oberflächen an den Formkörpern, die bei der Wiederverwendung nicht versinterten Materials auftreten. Das führt dazu, daß ein hoher Anteil an unbenutztem Pulver, sogenanntem Neupulver hinzugegeben werden muß, um diese Effekte zu vermeiden.

Insbesondere wenn große Anteile an Gebrauchtpulver verwendet werden, also Laser-Sinter-Pulver, welches schon einmal eingesetzt wurde, aber bei diesem Einsatz nicht aufgeschmolzen wurde, wird dieser Effekt beobachtet. Mit den Oberflächendefekten geht häufig eine Verschlechterung der mechanischen Eigenschaften einher, insbesondere wenn der Formkörper eine rauhe Oberfläche annimmt. Die Schädigung kann sich z. B. durch einen abfallenden Elastizitätsmodul, eine verschlechterte Reißdehnung oder ein verschlechtertes Kerbschlagverhalten bemerkbar machen.

Aufgabe der vorliegenden Erfindung war es deshalb, ein Laser-Sinter-Pulver bereitzustellen, welches eine bessere Resistenz gegenüber den thermischen Belastungen beim Lasersintern und verbesserte Alterungseigenschaften aufweist und somit besser wiederzuverwenden ist.

Überraschenderweise wurde nun gefunden, dass sich durch Zugabe von Metallseifen zu Polyamiden Sinterpulver herstellen lassen, aus denen sich Formkörper durch Laser-Sintern produzieren lassen, die deutlich unempfindlicher gegenüber den thermischen Belastungen sind als Formkörper aus herkömmlichen Sinter-Pulvern. Dadurch kann z. B. die Auffrischrate, d. h. die Menge unbenutzten Pulvers, die bei der Verwendung von Gebrauchtpulver zugesetzt werden muss, deutlich reduziert werden. Besonders vorteilhaft ist es, wenn nur die durch den Bau von Formteilen verbrauchte Menge ersetzt werden muss, was mit dem erfindungsgemäßen Pulver (nahezu) erreicht werden kann.

Gegenstand der vorliegenden Erfindung ist deshalb ein Sinterpulver zum selektiven Laser-Sintern, welches dadurch gekennzeichnet ist, dass das Pulver zumindest ein Polyamid und zumindest eine Metallseife, ausgewählt aus den Salzen einer Fettsäure mit mindestens 10 C-Atomen, einer Montansäure oder einer Dimersäure, aufweist.

Ebenso ist Gegenstand der vorliegenden Erfindung ein Verfahren zur Herstellung von erfindungsgemäßem Sinterpulver, welches dadurch gekennzeichnet ist, dass zumindest ein Polyamidpulver mit Metallseifenpartikeln zu einem Sinterpulver trocken oder - als weitere Ausführungsform - in Gegenwart eines Lösungsmittels, in welchem die Metallseifen zumindest eine geringe Löslichkeit aufweisen, vermischt wird und man das Dispergier-/Lösemittel anschließend wieder entfernt. Es versteht sich von selbst, daß die Schmelztemperaturen der einzusetzenden Metallseifen in beiden Ausführungsformen oberhalb Raumtemperatur liegen müssen.

Außerdem sind Gegenstand der vorliegenden Erfindung Formkörper, hergestellt durch Laser-Sintern, welche dadurch gekennzeichnet sind, dass sie Metallseife und zumindest ein Polyamid beinhalten.

Das erfindungsgemäße Sinterpulver hat den Vorteil, dass aus ihm durch Laser-Sintern hergestellte Formkörper auch aus wiederverwendetem Material hergestellt werden können. Es sind deshalb Formkörper zugänglich, die auch nach mehrfacher Wiederverwendung des überschüssigen Pulvers keine Einfallstellen aufweisen. Neben den Einfallstellen entsteht oft eine sehr rauhe Oberfläche, da es zur Alterung des Materials kommt. Die erfindungsgemäßen Formkörper zeigen eine deutlich höhere Beständigkeit gegenüber solchen Alterungsprozessen, was sich durch eine geringe Versprödung, eine gute Reißdehnung und/oder ein gutes Kerbschlagverhalten bemerkbar macht.

Das erfindungsgemäße Sinterpulver hat außerdem den Vorteil, dass es sehr gut auch nach einer thermischen Alterung als Sinterpulver verwendet werden kann. Dies ist unter anderem auch deshalb sehr gut möglich, weil bei der thermischen Alterung von erfindungsgemäßem Pulver überraschenderweise keine Abnahme der Rekristallisationstemperatur, ja sogar in vielen Fällen ein Anstieg der Rekristallisationstemperatur festgestellt werden kann (gleiches gilt häufig auch für die Kristallisationsenthalpie). Dadurch wird bei der Verbauung von gealtertem erfindungsgemäßem Pulver ein nahezu gleiches Kristallisationsverhalten erreicht wie mit Neupulver. Bisher übliches gealtertes Pulver kristallisiert erst bei deutlich niedrigeren Temperaturen als Neupulver, weshalb beim Verbauen von Altpulver Einfallstellen auftreten.

Ein weiterer Vorteil des erfindungsgemäßen Sinterpulvers liegt darin, dass es sich in beliebigen Mengen (0 bis 100 Teile) mit einem herkömmlichen Laser-Sinter-Pulver auf Basis von Polyamiden gleicher chemischer Struktur mischen lässt. Das erhaltene Pulvergemisch zeigt gegenüber herkömmlichem Sinterpulver ebenfalls eine verbesserte Beständigkeit gegenüber den thermischen Belastungen beim Lasersintern.

Außerdem konnte überraschenderweise festgestellt werden, dass Formkörper, hergestellt aus dem erfindungsgemäßen Sinterpulver, auch bei dessen mehrfacher Wiederverwendung gleichbleibend gute mechanische Eigenschaften aufweisen, insbesondere hinsichtlich Elastizitätsmodul, Zugfestigkeit, Dichte und Reißdehnung.

Das erfindungsgemäße Sinterpulver sowie ein Verfahren zu dessen Herstellung wird nachfolgend beschrieben, ohne dass die Erfindung darauf beschränkt sein soll.

Das erfindungsgemäße Sinterpulver zum selektiven Laser-Sintern zeichnet sich dadurch aus, dass das Pulver zumindest ein Polyamid und zumindest eine Metallseife, vorzugsweise ausgewählt aus den Salzen einer Fettsäure mit mindestens 10 C-Atomen, einer Montansäure oder einer Dimersäure, aufweist. Als Polyamid weist das erfindungsgemäße Sinterpulver vorzugsweise ein Polyamid auf, welches pro Carbonamid-Gruppe mindestens 8 Kohlenstoffatome aufweist. Bevorzugt weist das erfindungsgemäße Sinterpulver mindestens ein Polyamid auf, welches 9 oder mehr Kohlenstoffatome pro Carbonamid-Gruppe aufweist. Ganz besonders bevorzugt weist das Sinterpulver zumindest ein Polyamid, ausgewählt aus Polyamid 612 (PA 612), Polyamid 11 (PA 11) und Polyamid 12 (PA 12), auf.

Das erfindungsgemäße Sinterpulver weist vorzugsweise Polyamid mit einer mittleren Partikelgröße von 10 bis 250 µm, vorzugsweise von 45 bis 100 µm und besonders bevorzugt von 50 bis 80 µm auf.

Für das Lasersintern ist insbesondere ein Polyamid 12 Sinterpulver geeignet, welches eine Schmelztemperatur von 185 bis 189 °C, vorzugsweise von 186 bis 188 °C, eine Schmelzenthalpie von 112 ± 17 kJ/mol, vorzugsweise von 100 bis 125 kJ/mol und eine Erstarrungstemperatur von 133 bis 148 °C, vorzugsweise von 139 bis 143 °C aufweist. Der Prozess für die Herstellung für die den erfindungsgemäßen Sinterpulvem zugrunde liegenden Polyamidpulver ist allgemein bekannt und kann im Fall von PA 12 z. B. den Schriften DE 29 06 647, DE 35 10 687, DE 35 10 691 und DE 44 21 454, die zum Offenbarungsgehalt der vorliegenden Erfindung gehören sollen, entnommen werden. Das benötigte Polyamidgranulat kann von verschiedenen Herstellern bezogen werden, beispielsweise wird Polyamid 12 Granulat von der Degussa AG unter dem Handelsnamen VESTAMID angeboten.

Das erfindungsgemäße Sinterpulver weist bezogen auf die Summe der im Pulver vorhandenen Polyamide vorzugsweise von 0,01 bis 30 Gew.% zumindest einer Metallseife, bevorzugt von 0,1 bis 20 Gew.% Metallseife, besonders bevorzugt von 0,5 bis 15 Gew.% Metallseife und ganz besonders bevorzugt von 1 bis 10 Gew.-% Metallseife, jeweils bevorzugt als Partikel auf. Das erfindungsgemäße Sinterpulver kann eine Mischung von Metallseifenpartikeln und Polyamidpartikeln aufweisen oder aber Polyamidpartikel bzw. -pulver, welche eingearbeitete Metallseifen aufweisen. Bei einem Anteil der Metallseifen von unter 0,01 Gew.-% bezogen auf die Summe der im Pulver vorhandenen Polyamide nimmt der gewünschte Effekt der thermischen Stabilität und der Vergilbungsresistenz deutlich ab. Bei einem Anteil der Metallseifen von über 30 Gew.% bezogen auf die Summe der im Pulver vorhandenen Polyamide verschlechtern sich die mechanischen Eigenschaften wie z. B. die Reißdehnung der aus solchen Pulvern hergestellten Formkörper deutlich.

Die im erfindungsgemäßen Sinterpulver enthaltenen Metallseifen sind vorzugsweise Salze linearer gesättigter Alkanmonocarbonsäuren, die eine Kettenlänge von C10 bis C44 (Kettenlänge von 10 bis 44 Kohlenstoffatomen), bevorzugt C24 bis C36 aufweisen. Besonders bevorzugt werden Calciumsalze oder Natriumsalze gesättigter Fettsäuren bzw. von Montansäuren eingesetzt. Diese Salze sind günstig zu erhalten und am besten verfügbar.

Vorteilhaft für die Pulverauftragung auf die zu sinternde Schicht ist es, wenn die Metallseifen die Polyamidkörner in Form feinster Partikel umhüllen, was sich entweder durch Trockenmischen feingepulverter Metallseifen auf das Polyamidpulver oder Nassmischen von Polyamiddispersionen in einem Lösungsmittel, in welchem die Metallseife zumindest eine geringe Restlöslichkeit aufweist, erreichen lässt, da so ausgerüstete Partikel eine besonders gute Rieselfähigkeit aufweisen und auf eine Zugabe von Rieselhilfsmitteln weitestgehend oder sogar vollständig verzichtet werden kann. Man kann aber auch Pulver mit in Masse eincompoundierter Metallseife einsetzen, wenn man die Rieselfähigkeit - z. B. durch Aufmischen einer Rieselhilfe - anderweitig gewährleistet. Geeignete Rieselhilfen, wie pyrogenes Aluminiumoxid, pyrogenes Siliziumdioxid oder pyrogenes Titandioxid, sind dem Fachmann bekannt.

Erfindungsgemäßes Sinterpulver kann deshalb diese oder auch weitere Hilfsstoffe und/oder Füllstoff aufweisen. Solche Hilfsstoffe können z. B. die vorstehend genannten Rieselhilfsmittel, wie z. B. pyrogenes Siliziumdioxid oder auch gefällte Kieselsäuren sein. Pyrogenes Siliziumdioxid wird zum Beispiel unter dem Produktnamen Aerosil®, mit unterschiedlichen Spezifikationen, durch die Degussa AG angeboten. Vorzugsweise weist erfindungsgemäßes Sinterpulver weniger als 3 Gew.%, vorzugsweise von 0,001 bis 2 Gew.% und ganz besonders bevorzugt von 0,05 bis 1 Gew.-% solcher Hilfsstoffe bezogen auf die Summe der vorhandenen Polyamide auf. Die Füllstoffe können z. B. Glas-, Metall-oder Keramikpartikel, wie z. B. massive oder hohle Glaskugeln, Stahlkugeln oder Metallgrieß oder Buntpigmente, wie z. B. Übergangsmetalloxide sein.

Die Füllstoffpartikel weisen dabei vorzugsweise eine kleinere oder ungefähr gleich große mittlere Korngröße wie die Partikel der Polyamide auf. Vorzugsweise sollte die mittlere Korngröße d₅₀ der Füllstoffe die mittlere Korngröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Laser-Sinter-Apparatur.

Vorzugsweise weist erfindungsgemäßes Sinterpulver weniger als 75 Gew.%, bevorzugt von 0,001 bis 70 Gew.%, besonders bevorzugt von 0,05 bis 50 Gew.% und ganz besonders bevorzugt von 0,5 bis 25 Gew.% solcher Füllstoffe bezogen auf die Summe der vorhandenen Polyamide auf.

Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Sinterpulver hergestellt wurden. Die Überschreitung kann außerdem zu einer Störung der Eigenabsorption des Laserlichts durch das Sinterpulver führen, so dass ein solches Pulver für das selektive Lasersintern nicht mehr einsetzbar ist.

Das erfindungsgemäße Sinterpulver weist bevorzugt nach einer Wärmealterung des Pulvers eine Rekristallisationstemperatur (Rekristallisationspeak in der DSC) und/oder eine Kristallisationsenthalpie auf, die sich nicht zu kleineren Werten gegenüber dem Neupulver verschiebt. Unter Wärmealterung wird dabei ein Aussetzen des Pulvers für wenige Minuten bis mehrere Tage einer Temperatur im Bereich der Rekristallisationstemperatur bis wenige Grade unterhalb der Schmelzetemperatur verstanden. Eine typische künstliche Alterung kann z. B. bei einer Temperatur, die mit einer Abweichung von ca. plusminus 5 K der Rekristallisationstemperatur entspricht, für 5 bis 10, vorzugsweise für 7 Tage erfolgen. Eine Alterung beim Verbauen des Pulvers erfolgt typischerweise bei einer Temperatur von 1 bis 15, vorzugsweise von 3 bis 10 K unterhalb der Schmelzetemperatur für wenige Minuten bis zu zwei Tagen, je nachdem wie lange die Bauzeit für das jeweilige Bauteil beträgt. Die Wärmealterung geschieht beim Lasersintern dadurch, dass Pulver, welches beim schichtweisen Aufbau des dreidimensionalen Objekts nicht vom Laserstrahl erfasst wird, während des Bauvorgangs im Bauraum Temperaturen von nur wenigen Grad unterhalb der Schmelzetemperatur ausgesetzt werden. Bevorzugtes erfindungsgemäßes Sinterpulver weist nach Wärmealterung des Pulvers eine Rekristallisationstemperatur (einen Rekristallisationspeak) und/oder eine Kristallisationsenthalpie auf, die sich zu größeren Werten hin verschiebt. Vorzugsweise verschieben sich sowohl die Rekristallisationstemperatur als auch die Kristallisationsenthalphie zu größeren Werten. Ganz besonders bevorzugt weist ein erfindungsgemäßes Pulver, welches als Neupulver eine Rekristallisationstemperatur größer 138 °C aufweist, eine Rekristallisationstemperatur als Altpulver, welches durch Alterung für 7 Tage bei 135 °C erhalten wurde, auf, die von 0 bis 3, vorzugsweise von 0,1 bis 1 K über der Rekristallisationstemperatur des Neupulvers liegt.

Die Herstellung der erfindungsgemäßen Sinterpulver ist einfach möglich und erfolgt bevorzugt gemäß dem erfindungsgemäßen Verfahren zur Herstellung von erfindungsgemäßem Sinterpulver, welches sich dadurch auszeichnet, dass zumindest ein Polyamid mit zumindest einer Metallseife, vorzugsweise mit Pulver von Metallseifenpartikeln vermischt wird. Zum Beispiel kann ein durch Umfällung oder Vermahlung erhaltenes Polyamidpulver in organischem Lösungsmittel gelöst oder suspendiert werden und mit Metallseifenpartikeln vermischt werden oder aber das Polyamidpulver kann in Masse mit Metallseifenpartikeln vermischt werden. Bei dem Arbeiten in einem Lösemittel wird vorzugsweise zumindest eine Metallseife bzw. Metallseifenpartikel, die vorzugsweise zumindest teilweise in einem Lösemittel gelöst vorliegen, mit einer Lösung, die Polyamid aufweist, vermischt, wobei die Polyamid aufweisende Lösung das Polyamid entweder gelöst aufweisen kann und das Lasersinterpulver durch Fällen von Polyamid aus der metallseifenhaltigen Lösung erhalten wird oder die Lösung das Polyamid als Pulver suspendiert aufweisen kann und das Lasersinterpulver durch Entfernen des Lösemittels erhalten wird.

Eine feinteilige Vermischung kann in der einfachsten Ausführungsart des erfindungsgemäßen Verfahrens auf die verschiedensten bekannten Weisen erzielt werden. So kann das Vermischen beispielsweise durch Aufmischen fein gepulverter Metallseifen auf das trockene Polyamidpulver in schnelllaufenden mechanischen Mischern erfolgen oder als Naßmischung in langsamlaufenden Aggregaten - z. B. Schaufeltrockner oder umlaufenden Schneckenmischern (sog. Nautamischern) - oder durch Dispergieren der Metallseife und des Polyamidpulvers in einem organischen Lösungsmittel und anschließende destillative Entfernung des Lösungsmittels. Bei dieser Vorgehensweise ist es günstig, wenn das organische Lösungsmittel die Metallseifen zumindest in geringer Konzentration löst, da bei der Trocknung die Metallseifen in Form feinster Partikel auskristallisieren und das Polyamidkorn umhüllen. Für diese Variante geeignete Lösemittel sind beispielsweise niedere Alkohole mit 1 - 3 C-Atomen, bevorzugt kann Ethanol als Lösemittel eingesetzt werden.

Das Polyamidpulver kann bei einer dieser ersten Varianten des erfindungsgemäßen Verfahrens ein bereits als Lasersinterpulver geeignetes Polyamidpulver sein, dem einfach feinteilige Metallseifenpartikel zugemischt werden. Die Metallseifenpartikel weisen dabei vorzugsweise eine kleinere oder ungefähr gleich große mittlere Korngröße wie die Partikel der Polyamide auf. Vorzugsweise sollte die mittlere Korngröße d₅₀ der Metallseifenpartikel die mittlere Korngröße d₅₀ der Polyamidpulver um nicht mehr als 20 %, vorzugsweise um nicht mehr als 15 % und ganz besonders bevorzugt um nicht mehr als 5 % überschreiten. Die Korngröße ist insbesondere limitiert durch die zulässige Bauhöhe bzw. Schichtdicke in der Laser-Sinter-Apparatur.

Es ist ebenso möglich, herkömmliche Sinterpulver mit erfindungsgemäßen Sinterpulvern zu mischen. Auf diese Weise lassen sich Sinterpulver mit einer optimalen Kombination von mechanischen und optischen Eigenschaften herstellen. Das Verfahren zur Herstellung solcher Mischungen kann z. B. DE 34 41 708 entnommen werden.

In einer weiteren Verfahrensvariante werden eine oder mehrere Metallseifen mit einem, vorzugsweise geschmolzenem Polyamid durch Eincompoundieren gemischt und das erhaltene metallseifenhaltige Polyamid wird durch (Kalt-)-Mahlung oder Umfällung zu Lasersinterpulver verarbeitet. Üblicherweise wird bei der Compoundierung ein Granulat erhalten, welches anschließend zu Sinterpulver verarbeitet wird. Diese Umarbeitung kann z. B. durch Vermahlen oder Umfällen erfolgen. Die Verfahrensvariante, bei welcher die Metallseifen eincompoundiert werden, hat gegenüber dem reinen Mischungsverfahren den Vorteil, dass eine homogenere Verteilung der Metallseifen in dem Sinterpulver erzielt wird.

In diesem Fall wird man zur Verbesserung des Rieselverhaltens eine geeignete Rieselhilfe, wie pyrogenes Aluminiumoxid, pyrogenes Siliziumdioxid oder pyrogenes Titandioxid, dem gefällten oder kaltgemahlenen Pulver zusetzen.

In einer weiteren, bevorzugten Verfahrensvariante wird die Metallseife einer ethanolischen Lösung von Polyamid bereits beim Fällprozess dem Polyamid zugemischt. Ein solcher Fällprozess ist beispielsweise in DE 35 10 687 und DE 29 06 647 beschrieben. Mittels dieses Verfahrens kann z. B. Polyamid 12 aus einer ethanolischen Lösung durch kontrollierte Abkühlung nach einem geeigneten Temperaturprogramm ausgefällt werden. Die Metallseifen ergeben bei dieser Vorgehensweise ebenfalls eine feinteilige Umhüllung der Polyamidkörner, wie dies zuvor bei der Suspensionsvariante beschrieben worden ist. Für eine detaillierte Beschreibung des Fällverfahrens wird auf DE 35 10 687 bzw. DE 29 06 647 verwiesen.

Der Fachmann kann diese Verfahrenvariante in abgewandelter Form auch auf andere Polyamide anwenden, wobei Polyamid und Lösemittel so gewählt werden müssen, dass sich das Polyamid bei einer erhöhten Temperatur in dem Lösemittel löst und dass das Polyamid bei einer niedrigeren Temperatur und/oder beim Entfernen des Lösemittels aus der Lösung ausfällt. Durch Zugabe von Metallseifen, vorzugsweise in Form von Partikeln, zu dieser Lösung und anschließende Trocknung werden die entsprechenden erfindungsgemäßen Polyamid-Lasersinterpulver erhalten.

Als Metallseifen können z. B. die Salze der Monocarbonsäuren, die handelsübliche Produkte sind und beispielsweise bei der Fa. Clariant unter dem Handelsnamen Licomont ® bezogen werden können, eingesetzt werden.

Zur Verbesserung der Verarbeitungsfähigkeit oder zur weiteren Modifikation des Sinterpulvers können diesem anorganische Buntpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren sowie Füllstoffpartikel zugegeben werden. Vorzugsweise wird, bezogen auf das Gesamtgewicht an Polyamiden im Sinterpulver, soviel dieser Stoffe den Polyamiden zugegeben, dass die für das erfindungsgemäße Sinterpulver angegeben Konzentrationen für Füll- und/oder Hilfsstoffe eingehalten werden.

Gegenstand der vorliegenden Erfindung sind auch Verfahren zur Herstellung von Formkörpern durch selektives Lasersintern bei denen erfindungsgemäße Sinterpulver, die Polyamid und Metallseifen, also Salze der Alkanmonocarbonsäuren, vorzugsweise in partikulärer Form aufweisen, eingesetzt werden. Insbesondere ist Gegenstand der vorliegenden Erfindung ein Verfahren zur Herstellung von Formkörpern durch selektives Lasersintern eines metallseifenhaltigen Fällpulvers auf Basis eines Polyamid 12, welches eine Schmelztemperatur von 185 bis 189 °C, eine Schmelzenthalpie von 112 ± 17 J/g und eine Erstarrungstemperatur von 136 bis 145°C aufweist und dessen Verwendung in US 6,245,281 beschrieben wird.

Diese Verfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z. B. den Schriften US 6,136,948 und WO 96/06881 zu entnehmen.

Die erfindungsgemäßen Formkörper, die durch selektives Laser-Sintern hergestellt werden, zeichnen sich dadurch aus, dass sie ein metallseifenhaltiges Polyamid aufweisen. Vorzugsweise weisen die erfindungsgemäßen Formkörper zumindest ein Polyamid auf, welches pro Carbonamid-Gruppe mindestens 8 Kohlenstoffatome aufweist. Ganz besonders bevorzugt weisen erfindungsgemäße Formkörper zumindest ein Polyamid 612, Polyamid 11 und/oder ein Polyamid 12 und zumindest eine Metallseife auf.

Die in dem erfindungsgemäßen Formkörper vorhandene Metallseife basiert auf linearen gesättigten Alkanmonocarbonsäuren, die eine Kettenlänge von C10 bis C44, bevorzugt C24 bis C36 aufweisen. Vorzugsweise handelt es sich bei den Metallseifen um Calciumsalze oder Natriumsalze von gesättigten Fettsäuren oder von Montansäuren. Vorzugsweise weist der erfindungsgemäße Formkörper, bezogen auf die Summe der im Formkörper vorhandenen Polyamide, von 0,01 bis 30 Gew.% an Metallseifen, bevorzugt von 0,1 bis 20 Gew.-%, besonders bevorzugt von 0,5 bis 15 Gew.-% und ganz besonders bevorzugt von 1 bis 10 Gew.% auf.

Die Formkörper können außerdem Füllstoffe und/oder Hilfsstoffe, wie z. B. thermische Stabilisatoren und/oder Oxidationsstabilisatoren wie z. B. sterisch gehinderte Phenolderivate aufweisen. Füllstoffe können z. B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.%, vorzugsweise von 0,001 bis 2 Gew.% und ganz besonders bevorzugt von 0,05 bis 1 Gew.% solcher Hilfsstoffe bezogen auf die Summe der vorhandenen Polyamide auf. Ebenso bevorzugt weisen erfindungsgemäße Formkörper weniger als 75 Gew.-%, bevorzugt von 0,001 bis 70 Gew.%, besonders bevorzugt von 0,05 bis 50 Gew.% und ganz besonders bevorzugt von 0,5 bis 25 Gew.-% solcher Füllstoffe bezogen auf die Summe der vorhandenen Polyamide auf.

Die erfindungsgemäßen Formkörper können insbesondere auch dadurch hergestellt werden, dass ein erfindungsgemäßes Sinterpulver als gealtertes Material (Alterung wie oben beschrieben) eingesetzt wird, wobei dieses einen Rekristallisationspeak und eine Kristallisationsenthalpie aufweist, die jeweils nicht kleiner sind als die des nicht gealterten Materials. Vorzugsweise wird ein erfindungsgemäßer Formkörper unter Verwendung eines gealterten Materials eingesetzt, welches einen höheren Rekristallisationspeak und eine höhere Kristallisationsenthalpie als das nicht gealterte Material aufweist. Die Formkörper weisen trotz der Verwendung von Altpulver nahezu die gleichen Eigenschaften auf wie aus Neupulver hergestellte Formkörper.

Die folgenden Beispiele sollen das erfindungsgemäße Sinterpulver sowie dessen Verwendung beschreiben, ohne die Erfindung auf die Beispiele einzuschränken.

Die in den nachfolgenden Beispielen durchgeführte Bestimmung der BET-Oberfläche erfolgte nach DIN 66131. Die Schüttdichte wurde mit einer Apparatur gemäß DIN 53466 ermittelt. Die Messwerte der Laserbeugung wurden an einem Malvern Mastersizer S, Ver. 2.18 erhalten.

### Beispiel 1: Einarbeitung von Natriummontanat durch Umfällung

40 kg ungeregeltes, durch hydrolytische Polymerisation hergestelltes PA 12 (Die Herstellung eines solchen Polyamids wird z. B. in DE 21 52 194, DE 25 45 267 oder DE 35 1 0690 beschrieben.) mit einer relativen Lösungsviskosität η_{rel.} von 1.61 (in angesäuertem m-Kresol) und einem Endgruppengehalt von 72 mmol/kg COOH bzw. 68 mmol/kg NH2 werden mit 0,3 kg IRGANOX® 1098 und 0,8 kg Natriummontanat (Licomont® NAV101) sowie 350 1 Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K bis 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70 °C und 400mbar abdestilliert, und der Rückstand anschließend bei 20 mbar und 85 °C 3 Stunden nachgetrocknet. Von dem erhaltenen Produkt wurde eine Siebanalyse durchgeführt, die folgendes Ergebnis lieferte:

| | |
|---|---|
| Siebanalyse: | < 32µm: 8 Gew.-% |
| | < 40µm: 17 Gew.% |
| | < 50µm: 46 Gew.-% |
| | < 63µm: 85 Gew.-% |
| | < 80µm: 95 Gew.% |
| | < 100µm: 100 Gew.-% |
| BET: | 6,8 m²/g |
| Schüttdichte: | 433 g/l |
| Laserbeugung: | d(10%): 44µm, d(50 %): 69µm, d(90%): 97µm, |

### Beispiel 2: Einarbeitung von Natriummontanat durch Compoundierung und Umfällung

40 kg ungeregeltes, durch hydrolytische Polymerisation hergestelltes PA 12 mit einer relativen Lösungsviskosität ηᵣₑₗ. von 1.61 (in angesäuertem m-Kresol) und einem Endgruppengehalt von 72mmol/kg COOH bzw. 68mmol/kg NH2 werden mit 0,3 kg IRGANOX® 245 und 0,8 kg Natriummontanat (Licomont® NAV101) bei 225 °C in einer Zweiwellen-Compoundiermaschine (Bersttorf ZE25) extrudiert und als Strang granuliert. Dieses Compound wird anschließend mit 350 l Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70 °C/400 mbar abdestilliert, und der Rückstand anschließend bei 20 mbar/85 °C 3 Stunden nachgetrocknet. Von dem erhaltenen Produkt wurde eine Siebanalyse durchgeführt, die folgendes Ergebnis lieferte:

| | |
|---|---|
| Siebanalyse: | < 32µm: 11 Gew.% |
| | < 40µm: 18 Gew.% |
| | < 50µm: 41 Gew.% |
| | < 63µm: 83 Gew.-% |
| | < 80µm: 99 Gew.-% |
| | < 100µm: 100 Gew.-% |
| BET: | 7,3 m²/g |
| Schüttdichte: | 418 g/l |
| Laserbeugung: | d(10 %): 36 µm, d(50 %): 59 µm, d(90 %): 78 µm, |

### Beispiel 3: Einarbeitung von Natriummontanat in ethanolischer Suspension

Man verfährt wie in Beispiel 1 beschrieben, jedoch wird die Metallseife nicht zu Beginn zugegeben sondern es werden 0,4 kg Natriummontanat (Licomont® NAV101) bei 75 °C erst nach der Fällung der fällungsfrischen Suspension im Schaufeltrockner zugesetzt. Die Trocknung sowie die weitere Aufarbeitung erfolgt wie unter Beispiel 1 beschrieben.

| | |
|---|---|
| Siebanalyse: | < 32µm: 6 Gew.% |
| | < 40µm: 19 Gew.-% |
| | < 50µm: 44Gew.-% |
| | < 63µm: 88Gew.-% |
| | < 80µm: 94 Gew.-% |
| | < 100µm: 100 Gew.% |
| BET: | 5,9 m²/g |
| Schüttdichte: | 453 g/l |
| Laserbeugung: | d(10 %): 47 µm, d(50 %): 63 µm, d(90 %): 99 µm, |

### Beispiel 4: Einarbeitung von Calciummontanat in ethanolischer Suspension:

Man verfährt wie in Beispiel 3 beschrieben, setzt jedoch 0,4 kg Calciummontanat (Licomont® CAV 102P) bei 75 °C der fällungsfrischen Suspension im Schaufeltrockner zu und trocknet wie unter Beispiel 1 beschrieben zu Ende.

| | |
|---|---|
| Siebanalyse: | < 32µm: 6 Gew.% |
| | < 40µm: 17 Gew.-% |
| | < 50µm: 49 Gew.% |
| | < 63µm: 82 Gew.-% |
| | < 80µm: 97 Gew.-% |
| | < 100µm: 100 Gew.% |
| BET: | 5,4m²/g |
| Schüttdichte: | 442g/l |
| Laserbeugung: | d(10 %): 49 µm, d(50 %): 66 µm, d(90 %): 94 µm, |

### Beispiel 5: Einarbeitung von Magnesiumstearat in ethanolischer Suspension

Man verfährt wie in Beispiel 3 beschrieben, setzt jedoch 0,4 kg Magnesiumstearat (1 Gew.-%) bei 75 °C der fällungsfrischen Suspension im Schaufeltrockner zu und trocknet wie unter Beispiel 1 beschrieben zu Ende.

| | |
|---|---|
| Siebanalyse: | < 32µm: 5 Gew.-% |
| | < 40µm: 14 Gew.-% |
| | < 50µm: 43 Gew.-% |
| | < 63µm: 89 Gew.-% |
| | < 80µm: 91 Gew.-% |
| | < 100µm: 100 Gew.-% |
| BET: | 5,7m²/g |
| Schüttdichte: | 44.7g/l |
| Laserbeugung: | d(10 %): 44 µm, d(50 %): 59 µm, d(90 %): 91 µm, |

### Beispiel 6: Einarbeitung von Natriummontanat durch Umfällung

40 kg ungeregeltes PA12 wie in Beispiel 1 werden mit 0,2 kg Lowinox BHT® (= 2,6-Di-tert.butyl-4-methyl-phenol) und 0,4 kg (1 Gew.-%) Natriummontanat (Licomont® NAV101) mit 350 1 Ethanol, vergällt mit 2-Butanon und 1 % Wassergehalt, innerhalb von 5 Stunden in einem 0,8 m³-Rührkessel (D = 90cm, h = 170cm) auf 145 °C gebracht und unter Rühren (Blattrührer, d = 42cm, Drehzahl = 89 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 125 °C gebracht. Von jetzt an wird bei gleicher Kühlrate die Manteltemperatur 2K - 3K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 110 °C gebracht. Bei dieser Temperatur setzt die Fällung, erkennbar an der Wärmeentwicklung, ein. Nach 20 Minuten fällt die Innentemperatur mit dem Ende der Fällung ab. Nach Abkühlen der Suspension auf 75 °C wird die Suspension in einen Schaufeltrockner überführt. Das Ethanol wird daraus bei laufendem Rührwerk bei 70 °C/400 mbar abdestilliert, und der Rückstand anschließend bei 20mbar/85°C 3 Stunden nachgetrocknet.

| | |
|---|---|
| Siebanalyse: | < 32µm: 4 Gew.-% |
| | < 40µm: 19 Gew.-% |
| | < 50µm: 44 Gew.-% |
| | < 63µm: 83 Gew.-% |
| | < 80µm: 91 Gew.-% |
| | < 100µm: 100 Gew.-% |
| BET: | 6,1 m²/g |
| Schüttdichte: | 442 g/l |
| Laserbeugung: | d(10 %): 44 µm, d(50 %): 68 µm, d(90 %): 91 µm, |

### Beispiel 7: Einarbeitung von Calciummontanat durch Umfällung

40 kg ungeregeltes PA12 wie in Beispiel 1 werden mit 0,2 kg Lowinox TBP6® (= 4,4'-Thio-bis(2-tert.butyl-5-methyl-phenol) und 0,4 kg (1 Gew.-%) Calciummontanat (Licomont® CAV102P) mit 350 1 Ethanol, vergällt mit 2-Butanon und 1 % Wassergehalt, innerhalb von 5 Stunden in einem 0,8 m³-Rührkessel (D = 90cm, h = 170cm) auf 145 °C gebracht und unter Rühren (Blattrührer, d = 42 cm, Drehzahl = 90 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 125 °C gebracht. Von jetzt an wird bei gleicher Kühlrate die Manteltemperatur 2K - 3K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 110 °C gebracht. Bei dieser Temperatur setzt die Fällung, erkennbar an der Wärmeentwicklung, ein. Nach 20 Minuten fällt die Innentemperatur ab, die Fällung ist dann beendet. Nach Abkühlen der Suspension auf 75 °C wird die Suspension in einen Schaufeltrockner überführt. Das Ethanol wird daraus bei laufendem Rührwerk bei 70 °C/400 mbar abdestilliert, und der Rückstand anschließend bei 20 mbar/ 85 °C 3 Stunden nachgetrocknet.

| | |
|---|---|
| Siebanalyse: | < 32µm: 7 Gew.% |
| | < 40µm: 18 Gew.% |
| | < 50µm: 47 Gew.% |
| | < 63µm: 85 Gew.-% |
| | < 80µm: 92 Gew.% |
| | < 100µm: 100 Gew.-% |
| BET: | 6,6m²/g |
| Schüttdichte: | 441 g/l |
| Laserbeugung: | d(10 %): 43 µm, d(50 %): 69 µm, d(90 %): 94 µm, |

### Beispiel 8: Einarbeitung von Zinkstearat im Dry Blend

Zu 2 kg (100 Teile)Polyamid 12-Pulver, hergestellt gemäß DE 29 06 647 mit einem mittleren Korndurchmesser d₅₀ von 57 µm (Laserbeugung) und einer Schüttdichte gemäß DIN 53466 von 460 g/l wird 20 g (1 Teil) Zinkstearat im Dry-Blend-Verfahren unter Benutzung eines Henschelmischers FML10/KM23 bei 700 U/min bei 50 °C 3 Minuten gemischt. Anschließend wurden 2 g Aerosil 200 (0,1 Teile) bei Raumtemperatur und 500 U/min 3 Minuten untergemischt.

### Beispiel 9: Einarbeitung von Calciummontanat im Dry Blend

Zu 2 kg (100 Teile)Polyamid 12-Pulver, hergestellt gemäß DE 29 06 647 mit einem mittleren Komdurchmesser d₅₀ von 65 µm (Laserbeugung) und einer Schüttdichte gemäß DIN 53466 von 472 g/l wird 60 g (3 Teile) Calciummontanat zusammen mit 1 g Aerosil 200 (0,05 Teile) im Dry-Blend-Verfahren unter Benutzung eines Henschelmischers FML10/KM23 bei 400 U/min bei Raumtemperatur 3 Minuten gemischt.

### Beispiel 10: Einarbeitung von Calciumstearat im Dry Blend

Zu 2 kg (100 Teile)Polyamid 12-Pulver, hergestellt gemäß DE 29 06 647 mit einem mittleren Komdurchmesser d₅₀ von 48 µm (Laserbeugung) und einer Schüttdichte gemäß DIN 53466 von 450 g/l wird 10 g (0,5 Teile) Calciumstearat im Dry-Blend-Verfahren unter Benutzung eines Henschelmischers FML10/KM23 bei 400 U/min 5 Minuten gemischt bei Raumtemperatur.

### Bespiel 11: Vergleichsbeispiel (nicht erfindungsgemäß):

40 kg ungeregeltes, durch hydrolytische Polymerisation hergestelltes PA 12 mit einer relativen Lösungsviskosität η_{rel.} von 1.61 (in angesäuertem m-Kresol) und einem Endgruppengehalt von 72mmol/kg COOH bzw. 68mmol/kg NH2 werden mit 0,3 kg IRGANOX® 1098 in 350 1 Ethanol, vergällt mit 2-Butanon und 1 % Wassergehalt, innerhalb von 5 Stunden in einem 0,8 m³-Rührkessel (D = 90 cm, h= 1 70cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführl Das Ethanol wird daraus bei laufendem Rührwerk bei 70 °C/400 mbar abdestilliert, und der Rückstand anschließend bei 20 mbar/ 85 °C 3 Stunden nachgetrocknet.

| | |
|---|---|
| Siebanalyse: | < 32µm: 7 Gew.-% |
| | < 40µm: 16 Gew.-% |
| | < 50µm: 44 Gew.-% |
| | < 63µm: 85 Gew.% |
| | < 80µm: 92 Gew.-% |
| | < 100µm: 100Gew.% |
| BET: | 6,9 m²/g |
| Schüttdichte: | 429 g/l |
| Laserbeugung: | d(10 %): 42 µm, d(50 %): 69 µm, d(90 %): 91 µm |

### Weiterverarbeitung und Alterungsversuche:

Alle Proben aus den Beispielen 1 bis 7 und 11 wurden in einem Mixaco-Mischer CM50 D, 150 U/min, 1 Minute lang mit 0,1 Gew.% Aerosil 200 versetzt. Teile der erhaltenen Pulver aus den Beispielen 1 bis 11 wurden im Vakuumtrockenschrank für 7 Tage bei 135 °C künstlich gealtert und anschließend ohne Zugabe von neuem Pulver auf einer Laser-Sinter-Maschine verbaut. An den Bauteilen gemäß wurden mechanische Werte mittels Zugversuch nach EN ISO 527 ermittelt (Tabelle 1). Die Dichte wurde nach einem vereinfachten internen Verfahren ermittelt. Dazu werden die hergestellten Zugstäbe nach ISO 3167 (multi purpose test specimen) vermessen und daraus das Volumen berechnet, das Gewicht der Zugstäbe bestimmt und aus Volumen und Gewicht die Dichte berechnet. Zugstäbe und Bauteile gemäß ISO 3167 wurden zu Vergleichzwecken auch aus Neupulver (nicht gealtertem Pulver) hergestellt. Die Herstellung erfolgte jeweils auf einer Laser-Sinter-Maschine EOSINT P360 der Firma EOS GmbH.

**Tabelle 1: mechanische Werte an künstlich gealtertem Pulver im Vergleich mit nicht gealtertem Pulver**

| | Reißdehnung in % | Elastizitätsmodul in N/mm² | Dichte in g/cm³ |
|---|---|---|---|
| Teile aus Standardpulver gemäß Beispiel 11, nicht gealtert | 21,2 | 1641 | 0,96 |
| Teile aus Standardpulver gemäß Beispiel 11, gealtert | 9,4 | 244 | 0,53 |
| Teile aus Beispiel 3, nicht gealtert | 18,9 | 1573 | 0,95 |
| Teile aus Beispiel 1, gealtert | 19,5 | 1640 | 0,95 |
| Teile aus Beispiel 2, gealtert | 18,6 | 1566 | 0,95 |
| Teile aus Beispiel 3, gealtert | 19,8 | 1548 | 0,94 |
| Teile aus Beispiel 4, gealtert | 18,1 | 1628 | 0,95 |
| Teile aus Beispiel 5, gealtert | 14,2 | 1899 | 0,97 |
| Teile aus Beispiel 6, gealtert | 19,6 | 1560 | 0,94 |
| Teile aus Beispiel 7, gealtert | 21,8 | 1558 | 0,95 |
| Teile aus Beispiel 8, gealtert | 15,2 | 1731 | 0,96 |
| Teile aus Beispiel 9, gealtert | 15,6 | 1734 | 0,95 |
| Teile aus Beispiel 10, gealtert | 5,6 | 1664 | 0,96 |

Wie der Tabelle 1 zu entnehmen ist, werden durch das Einmischen von Metallseifen die nachfolgend beschriebenen Verbesserungen erzielt. Die Dichte nach der Alterung bleibt durch die Modifikation etwa auf dem Niveau wie bei einem Neupulver. Auch die mechanischen Eigenschaften wie die Reißdehnung und der Elastizitätsmodul verbleiben trotz Alterung des Pulvers auf hohem Niveau.

### Versuch zur Kreislaufverarbeitung

Ein Pulver, hergestellt gemäß Beispiel 3 und ein Vergleichspulver, hergestellt gemäß Vergleichsbeispiel, wobei jeweils auf eine künstliche Alterung verzichtet wurde, wurden außerdem auf einer Laser-Sinter-Maschine (EOSINT P360 der Firma EOS GmbH) im Kreislauf, das heißt, dass eingesetztes, aber nicht versintertes Pulver im nächsten Bauprozeß wieder eingesetzt wird, verarbeitet. Nach jedem Durchlauf wurde durch Zugabe von 20 % unbenutztem Pulver das wiedereingesetzte Pulver aufgefrischt. An den Bauteilen wurden mechanische Werte mittels Zugversuch nach EN ISO 527 ermittelt. Die Dichte wurde nach dem vereinfachten internen Verfahren, wie oben beschrieben, ermittelt. In Tabelle 2 sind die Messwerte von Bauteilen, die durch die Kreislaufverarbeitung erhalten wurden, aufgeführt.

**Tabelle 2: Kreislaufverarbeitung**

| | **Material aus Beispiel 3** | | | **Vergleichsbeispiel** | | |
|---|---|---|---|---|---|---|
| | **Bauteildichte [g/cm**^{**3**}**]** | **E-Modul [Mpa]** | **Reißdehnung [%]** | **Bauteildichte [g/cm**^{**3**}**]** | **E-Modul [MPa]** | **Reißdehnung [%]** |
| **1. Durchlauf** | 0,95 | 1573 | 18,9 | 0,95 | 1603 | 17,8 |
| **3. Durchlauf** | 0,96 | 1595 | 21,5 | 0,88 | 1520 | 15,2 |
| **6. Durchlauf** | 0,97 | 1658 | 29 | 0,8 | 1477 | 14,9 |

Der Tabelle 2 ist eindeutig zu entnehmen, dass auch beim 6. Durchlauf weder die Dichte noch die mechanischen Eigenschaften des aus einem erfindungsgemäßen Pulver hergestellten Bauteil nachlassen. Im Gegensatz dazu nehmen die Dichte und die mechanischen Eigenschaften des aus dem Vergleichspulver hergestellten Bauteil mit der Anzahl der Durchläufe deutlich ab.

Zur weiteren Untersuchung von erfindungsgemäßem Pulver wurden sowohl an erfindungsgemäß hergestelltem Pulver als auch an Proben von Bauteilen DSC-Untersuchungen nach DIN 53765 mit einem DSC-Gerät (Perkin Elmer DSC 7) durchgeführt. Die Ergebnisse dieser Untersuchungen sind in Tabelle 3 zusammengefasst. In der Spalte "Verfahren gemäß" ist angegeben, nach welchem Verfahren die Pulver hergestellt wurden, wobei jeweils in der Spalte "Metallseife" angegeben wurde, ob, welche und wie viel Metallseife bei der Herstellung des Pulvers eingesetzt wurde. Die Bauteile entsprechen wiederum ISO 3167 und wurden wie oben beschrieben erhalten. Charakteristisch für die erfindungsgemäßen Pulver bzw. für Bauteile, die aus dem erfindungsgemäßen Pulver hergestellt wurden, ist eine zum nicht modifizierten Pulver erhöhte Schmelzenthalpie, sowie eine deutlich erhöhte Rekristallisationstemperatur. Die Kristallisationsenthalpie ist ebenfalls erhöht. Die Werte beziehen sich auf wie weiter oben beschriebenes künstlich gealtertes Pulver bzw. auf Bauteile, die aus diesem gealterten Pulver hergestellt wurden.

**Tabelle 3: Werte der DSC-Messung**

| **Metallseife** | **1. Aufheizen** | **Abkühlen** | **Abkühlen** | **2. Aufheizen** | **Verfahren gemäß** |
|---|---|---|---|---|---|
| | **Schmetzenthalpie** | **Rekristallis ationspeak** | **Kristaltisatio nsenthalpie** | **Schmelzenthalpie** | |
| | ΔH_{S} | T_{KP} | ΔH_{K} | ΔH_{S} | |
| | J/g | °C | J/g | J/g | |
| Bauteil (aus künstlich gealtertem Pulver) | | | | | |
| 1 % Licomont NaV 101 | 92 | 138 | 65 | 73 | Beispiel 3 |
| 2 % Licomont NaV 101 | 95 | 139 | 69 | 74 | Beispiel 3 |
| 3% Licomont NaV 101 | 88 | 140 | 70 | 70 | Beispiel 3 |
| 5% Licomont NaV 101 | 88 | 140 | 70 | 72 | Beispiel 3 |
| 1 % Zn Stearat | 97 | 138 | 70 | 78 | Beispiel 8 |
| 1 % CaStearat | 99 | 139 | 69 | 71 | Beispiel 8 |
| 1 % MgStearat | 101 | 139 | 70 | 73 | Beispiel 8 |
| Standardmaterial | 88 | 131 | 58 | 60 | Beispiel 11 |
| Bauteil (aus nicht gealtertem Pulver) | | | | | |
| Standardmaterial | 106 | 136 | 63 | 67 | Beispiel 11 |

Wie der Tabelle zu entnehmen ist, sind die Bauteile aus gealterten, erfindungsgemäß modifizierten Pulver bezüglich ihrer kristallinen Eigenschaften den Bauteilen aus einem unbenutzten Pulver ähnlich, während das Bauteil aus gealtertem Vergleichspulver (Standardmaterial) deutlich abweichende Eigenschaften aufweist. Bezüglich der Rekristallisationstemperatur und der Kristallisationsenthalpie kann außerdem festgestellt werden, dass das Metallseifen aufweisende Pulver als Altpulver eine gleiche oder sogar höhere Rekristallisationstemperatur und Kristallisationsenthalpie gegenüber dem unbehandelten Neupulver aufweist. Im Gegensatz dazu nimmt die Rekristallisationstemperatur und die Kristallisationsenthalpie beim unbehandelten Altpulver gegenüber dem Neupulver ab.

## Patentansprüche

1. Sinterpulver zum selektiven Laser-Sintern,
**dadurch gekennzeichnet,**
**dass** das Pulver zumindest ein Polyamid und zumindest eine Metallseife, ausgewählt aus den Salzen einer Fettsäure mit mindestens 10 C-Atomen, einer Montansäure oder einer Dimersäure, aufweist.

2. Sinterpulver nach Anspruch 1,
**dadurch gekennzeichnet,**
**dass** es ein Polyamid aufweist, welches pro Carbonamid-Gruppe zumindest 8 Kohlenstoffatome aufweist.

3. Sinterpulver nach Anspruch 1 oder 2,
**dadurch gekennzeichnet,**
**dass** es Polyamid 612, Polyamid 11 oder Polyamid 12 oder Copolyamide basierend auf den vorgenannten Polyamiden aufweist.

4. Sinterpulver nach einem der Ansprüche 1 bis 3,
**dadurch gekennzeichnet,**
**dass** das Pulver bezogen auf die Summe der im Pulver vorhandenen Polyamide von 0,01 bis 30 Gew.% Metallseife aufweist.

5. Sinterpulver nach Anspruch 4,
**dadurch gekennzeichnet,**
**dass** das Pulver bezogen auf die Summe der im Pulver vorhandenen Polyamide von 0,5 bis 15 Gew.% Metallseife aufweist.

6. Sinterpulver nach einem der Ansprüche 1 bis 5,
**dadurch gekennzeichnet,**
**dass** das Pulver eine Mischung von feinteiligen Metallseifenpartikeln und Polyamidpartikeln aufweist.

7. Sinterpulver nach einem der Ansprüche 1 bis 5,
**dadurch gekennzeichnet,**
**dass** das Pulver in Polyamidpartikeln eingearbeitete Metallseifen aufweist.

8. Sinterpulver nach zumindest einem der Ansprüche 1 bis 7,
**dadurch gekennzeichnet,**
**dass** die Metallseifen Alkali- oder Erdalkalisalze der zugrunde liegenden Alkanmonocarbonsäuren oder Dimersäuren sind.

9. Sinterpulver nach zumindest einem der Ansprüche 1 bis 8,
**dadurch gekennzeichnet,**
**dass** nach Wärmealterung des Pulvers der Rekristallisationspeak und/oder die Kristallisationsenthalpie des Pulvers sich nicht zu kleineren Werten verschiebt.

10. Sinterpulver nach zumindest einem der Ansprüche 1 bis 9,
**dadurch gekennzeichnet,**
**dass** nach Wärmealterung des Pulvers der Rekristallisationspeak und/oder die Kristallisationsenthalpie sich zu größeren Werten verschiebt.

11. Sinterpulver nach zumindest einem der Ansprüche 1 bis 10,
**dadurch gekennzeichnet,**
**dass** die Metallseifen Natrium- oder Calciumsalze der zugrunde liegenden Alkanmonocarbonsäuren oder Dimersäuren sind.

12. Sinterpulver nach zumindest einem der Ansprüche 1 bis 11
**dadurch gekennzeichnet,**
**dass** es zusätzlich Hilfsstoffe und/oder Füllstoff aufweist.

13. Sinterpulver nach Anspruch 12,
**dadurch gekennzeichnet,**
**dass** es als Hilfsstoff Rieselhilfsmittel aufweist.

14. Sinterpulver nach Anspruch 12 oder 13,
**dadurch gekennzeichnet,**
**dass** es als Füllstoff Glaspartikel aufweist.

15. Verfahren zur Herstellung von Sinterpulver gemäß zumindest einem der Ansprüche 1 bis 14, **dadurch gekennzeichnet,**
**dass** zumindest ein Polyamid mit einer Metallseife vermischt wird.

16. Verfahren nach Anspruch 15,
**dadurch gekennzeichnet,**
**dass** durch Umfällung oder Vermahlung erhaltenes Polyamidpulver in organischem Lösungsmittel gelöst oder suspendiert oder in Masse mit Metallseifenpartikeln vermischt wird.

17. Verfahren nach Anspruch 15,
**dadurch gekennzeichnet,**
**dass** die Metallseifen in eine Schmelze von Polyamid eincompoundiert werden und das erhaltene metallseifenhaltige Polyamid durch Fällung oder Vermahlung zu Lasersinterpulver verarbeitet wird.

18. Verfahren nach Anspruch 15,
**dadurch gekennzeichnet,**
**dass** zumindest eine Metallseife bzw. Metallseifenpartikel mit einer Lösung, die Polyamid aufweist, vermischt wird, wobei die Polyamid aufweisende Lösung das Polyamid entweder gelöst aufweist und das Lasersinterpulver durch Fällen erhalten wird oder die Lösung das Polyamid als Pulver suspendiert aufweist und das Lasersinterpulver durch Entfernen des Lösemittels erhalten wird.

19. Verfahren zur Herstellung von Formkörpern durch selektives Lasersintern von Sinterpulver gemäß zumindest einem der Ansprüche 1 bis 14.

20. Formkörper, hergestellt durch Laser-Sintern
**dadurch gekennzeichnet,**
**dass** er zumindest eine Metallseife und zumindest ein Polyamid aufweist.

21. Formkörper nach Anspruch 20,
**dadurch gekennzeichnet,**
**dass** er aus einem Polyamid besteht, welches pro Carbonamid-Gruppe zumindest 8 Kohlenstoffatome aufweist.

22. Formkörper nach Anspruch 20 oder 21,
**dadurch gekennzeichnet,**
**dass** er Polyamid 612, Polyamid 11 und/oder Polyamid 12 aufweist.

23. Formkörper nach einem der Ansprüche 20 bis 22,
**dadurch gekennzeichnet,**
**dass** er bezogen auf die Summe der vorhandenen Polyamide von 0,01 bis 30 Gew.-% Metallseife aufweist.

24. Formkörper nach Anspruch 23,
**dadurch gekennzeichnet,**
**dass** er bezogen auf die Summe der vorhandenen Polyamide von 0,5 bis 15 Gew.-% Metallseife aufweist.

25. Formkörper nach zumindest einem der Ansprüche 20 bis 24,
**dadurch gekennzeichnet,**
**dass** die Metallseife ein Natrium- oder Calciumsalz einer Alkanmonocarbonsäure ist.

26. Formkörper nach zumindest einem der Ansprüche 20 bis 25,
**dadurch gekennzeichnet,**
**dass** er Füllstoffe aufweist.

27. Formkörper nach Anspruch 26,
**dadurch gekennzeichnet,**
**dass** einer der Füllstoffe Glaspartikel sind.

28. Formkörper nach einem der Ansprüche 20 bis 27,
**dadurch gekennzeichnet,**
**dass** der Formkörper unter Verwendung von gealtertem Material hergestellt wird, welches einen Rekristallisationspeak und eine Kristallisationsenthalpie aufweist, die jeweils nicht kleiner sind als die des nicht gealterten Materials.

29. Formkörper nach Anspruch 28,
**dadurch gekennzeichnet,**
**dass** der Formkörper unter Verwendung von gealtertem Material hergestellt wird, welches einen höheren Rekristallisationspeak und eine höhere Kristallisationsenthalpie als das nicht gealterte Material aufweist.

## Revendications

1. Poudre pour frittage sélectif au laser,
**caractérisée en ce qu'**
elle contient au moins un polyamide, et au moins un savon métallique choisi parmi les sels d'un acide gras ayant au moins 1.0 atomes de carbone, d'un acide montanique ou d'un acide dimère.

2. Poudre pour frittage selon la revendication 1,
**caractérisée en ce qu'**
elle contient un polyamide qui présente par groupe carbonamide au moins 8 atomes de carbone.

3. Poudre pour frittage selon la revendication 1 ou 2,
**caractérisée en ce qu'**
elle contient du polyamide 612, du polyamide 11 ou du polyamide 12 ou des copolyamides à base de ces polyamides.

4. Poudre pour frittage selon l'une quelconque des revendications 1 à 3,
**caractérisée en ce qu'**
elle contient, par rapport à la somme des polyamides présents dans celle-ci, de 0.01 à 30 % en poids de savon métallique.

5. Poudre pour frittage selon la revendication 4,
**caractérisée en ce qu'**
elle contient, par rapport à la somme des polyamides présents dans celle-ci, de 0,5 à 15 % en poids de savon métallique.

6. Poudre pour frittage selon l'une quelconque des revendications 1 à 5,
**caractérisée en ce qu'**
elle contient un mélange de fines particules de savon métallique et de particules de polyamide.

7. Poudre pour frittage selon l'une quelconque des revendications 1 à 5,
**caractérisée en ce qu'**
elle contient des savons métalliques intégrés dans des particules de polyamide.

8. Poudre pour frittage selon au moins l'une quelconque des revendications 1 à 7.
**caractérisée en ce que**
les savons métalliques sont des sels alcalins ou alcalinoterreux des acides monocarboxyliques d'alcane ou des acides dimères constituant la base.

9. Poudre pour frittage selon au moins l'une quelconque des revendications 1 à 8.
**caractérisée en ce qu'**
après son vieillissement à la chaleur, son pic de recristallisation et/ou son enthalpie de cristallisation ne se décalent pas vers des valeurs plus faibles.

10. Poudre pour frittage selon au moins l'une quelconque des revendications 1 à 9,
**caractérisée en ce qu'**
après son vieillissement à la chaleur, son pic de recristallisation et/ou son enthalpie de cristallisation se décalent vers des valeurs plus élevées.

11. Poudre pour frittage selon au moins l'une quelconque des revendications 1 à 10,
**caractérisée en ce que**
les savons métalliques sont des sels de sodium ou de calcium des acides monocarboxyliques d'alcane ou des acides dimères constituant la base.

12. Poudre pour frittage selon au moins l'une quelconque des revendications 1 à 11,
**caractérisée en ce qu'**
elle contient également des adjuvants et/ou une matière de charge.

13. Poudre pour frittage selon la revendication 12,
**caractérisée en ce qu'**
elle contient un adjuvant fluide.

14. Poudre pour frittage selon la revendication 12 ou 13,
**caractérisée en ce qu'**
elle contient des particules de verre comme matière de charge.

15. Procédé de préparation de poudre pour frittage selon au moins l'une quelconque des revendications 1 à 14,
**caractérisé en ce qu'**
au moins un polyamide est mélangé avec un savon métallique.

16. Procédé selon la revendication 15,
**caractérisé en ce que**
de la poudre de polyamide obtenue par précipitation ou broyage est dissoute ou mise en suspension dans un solvant organique ou est mélangée dans la masse avec des particules de savon métallique.

17. Procédé selon la revendication 15,
**caractérisé en ce que**
les savons métalliques sont compoundés dans une masse fondue de polyamide et le polyamide ainsi obtenu, contenant des savons métalliques, est traité par précipitation ou broyage pour donner une poudre pour frittage au laser.

18. Procédé selon la revendication 15.
**caractérisé en ce qu'**
au moins un savon métallique ou des particules de savon métallique sont mélangés avec un solvant qui contient un polyamide, et soit la solution contient le polyamide à l'état dissout et la poudre pour frittage au laser est obtenue par précipitation, soit la solution contient le polyamide sous forme de poudre en suspension et la poudre pour frittage au laser est obtenue par élimination du solvant.

19. Procédé de fabrication de corps moulés, par frittage sélectif au laser d'une poudre pour frittage selon au moins l'une quelconque des revendications 1 à 14.

20. Corps moulé, fabriqué par frittage au laser,
**caractérisé en ce qu'**
il contient au moins un savon métallique et au moins un polyamide.

21. Corps moulé selon la revendication 20.
**caractérisé en ce qu'**
il est constitué d'un polyamide qui présente par groupe carbonamide au moins 8 atomes de carbone.

22. Corps moulé selon la revendication 20 ou 21,
**caractérisé en ce qu'**
il contient du polyamide 612, du polyamide 11 et/ou du polyamide 12.

23. Corps moulé selon l'une quelconque des revendications 20 à 22,
**caractérisé en ce qu'**
il contient, par rapport à la somme des polyamides présents, de 0,01 à 30 % en poids de savon métallique.

24. Corps moulé selon la revendication 23,,
**caractérisé en ce qu'**
il contient, par rapport à la somme des polyamides présents, de 0.5 à 15 % en poids de savon métallique.

25. Corps moulé selon au moins l'une quelconque des revendications 20 à 24,
**caractérisé en ce que**
le savon métallique est un sel de sodium ou de calcium d'un acide monocarboxylique d'alcane.

26. Corps moulé selon au moins l'une quelconque des revendications 20 à 25,
**caractérisé en ce qu'**
il contient des matières de charge.

27. Corps moulé selon la revendication 26,
**caractérisé en ce que**
l'une des matières de charge est constituée par des particules de verre.

28. Corps moulé selon l'une quelconque des revendications 20 à 27,
**caractérisé en ce qu'**
il est fabriqué en utilisant du matériau vieilli qui présente un pic de recristallisation et une enthalpie de cristallisation qui, respectivement, ne sont pas inférieurs à ceux du matériau non vieilli.

29. Corps moulé selon la revendication 28.
**caractérisé en ce qu'**
il est fabriqué en utilisant du matériau vieilli qui présente un pic de recristallisation et une enthalpie de cristallisation plus élevés que ceux du matériau non vieilli.

## Claims

1. A sinter powder for selective laser sintering,
**characterized in that**
the powder comprises at least one polyamide and at least one metal soap selected from the salts of a fatty acid having at least 10 carbon atoms, or of a montanic acid, or of a dimer acid.

2. A sinter powder according to claim 1,
**characterized in that**
it comprises a polyamide which has at least 8 carbon atoms per carboxamide group.

3. A sinter powder according to claim 1 or 2,
**characterized in that**
it comprises nylon-6,12, nylon-11, or nylon-12, or a copolyamide based on the abovementioned polyamide.

4. A sinter powder according to any one of claims 1 to 3,
**characterized in that**
the powder comprises, based on the entirety of the polyamides present in the powder, from 0.01 to 30% by weight of metal soap.

5. A sinter powder according to claim 4,
**characterized in that**
the powder comprises, based on the entirety of the polyamides present in the powder, from 0.5 to 15% by weight of metal soap.

6. A sinter powder according to any one of claims 1 to 5,
**characterized in that**
the powder comprises a mixture of fine metal soap particles and polyamide particles.

7. A sinter powder according to any one of claims 1 to 5,
**characterized in that**
the powder comprises a metal soap incorporated within a polyamide particle.

8. A sinter powder according to at least one of claims 1 to 7,
**characterized in that**
the metal soap is an alkali metal or alkaline earth metal salt of the underlying alkanemonocarboxylic acid or dimer acid.

9. A sinter powder according to at least one of claims 1 to 8,
**characterized in that**,
after heat-ageing of the powder, the recrystallization peak and/or the enthalpy of crystallization of the powder does not shift to a smaller value.

10. A sinter powder according to at least one of claims 1 to 9,
**characterized in that**,
after heat-ageing of the powder, the recrystallization peak and/or the enthalpy of crystallization does not shift to a higher value.

11. A sinter powder according to at least one of claims 1 to 10,
**characterized in that**,
the metal soap is a sodium or calcium salt of the underlying alkanemonocarboxylic acid or dimer acid.

12. A sinter powder according to at least one of claims 1 to 11,
**characterized in that**,
it also comprises an auxiliary and/or filler.

13. A sinter powder according to claim 12,
**characterized in that**
it comprises a flow aid as auxiliary.

14. A sinter powder according to claim 12 or 13,
**characterized in that**
it comprises glass particles as filler.

15. A process for producing sinter powder according to at least one of claims 1 to 14, **characterized in that**,
at least one polyamide is mixed with a metal soap.

16. A process according to claim 15,
**characterized in that**
polyamide powder obtained by reprecipitation or milling is mixed, after suspension or solution in organic solvent, or in bulk, with metal soap particles.

17. A process according to claim 15,
**characterized in that**
the metal soap is compounded into a melt of polyamide, and the resultant polyamide comprising metal soap is processed by precipitation or milling to give laser sinter powder.

18. A process according to claim 15,
**characterized in that**
at least one metal soap or metal soap particles is/are mixed with a solution which comprises polyamide, and either the solution comprising the polyamide comprises the polyamide in dissolved form and the laser sinter powder is obtained by precipitation, or the solution comprises the polyamide suspended in powder form and the laser sinter powder is obtained by removing the solvent.

19. A process for producing a moulding by selective laser sintering of sinter powder according to at least one of claims 1 to 14.

20. A moulding produced by laser sintering,
**characterized in that**
it comprises at least one metal soap and at least one polyamide.

21. A moulding according to claim 20,
**characterized in that**,
it is composed of a polyamide which has at least 8 carbon atoms per carboxamide group.

22. A moulding according to claim 20 or 21,
**characterized in that**
it comprises nylon-6,12, nylon- 11, and/or nylon-12.

23. A moulding according to any one of claims 20 to 22,
**characterized in that**
it comprises, based on the entirety of the polyamides present, from 0.01 to 30% by weight of metal soap.

24. A moulding according to claim 23,
**characterized in that**,
it comprises, based on the entirety of the polyamides present, from 0.5 to 15% by weight of metal soap.

25. A moulding according to at least one of claims 20 to 24,
**characterized in that**,
the metal soap is a sodium or calcium salt of an alkanemonocarboxylic acid.

26. A moulding according to at least one of claims 20 to 25,
**characterized in that**
it comprises a filler.

27. A moulding according to claim 26,
**characterized in that**
glass particles are one of the fillers.

28. A moulding according to any one of claims 20 to 27,
**characterized in that**
the moulding is produced using aged material of which neither the recrystallization peak nor the enthalpy of crystallization is smaller than those for the unaged material.

29. A moulding according to claim 28,
**characterized in that**
the moulding is produced using aged material of which the recrystallization peak and the enthalpy of crystallization are higher than for the unaged material.
